# EUROPEAN PATENT APPLICATION

(11) **EP 3 626 428 A1**
(43) Date of publication of application: **25.03.2020**
(21) Application number: 17909927.0
(22) Date of filing: 01.12.2017
(51) Int. Cl.: B29C 64/124, B29C 64/40, G02B 5/08, B33Y 30/00

(54) **SLA 3D PRINTER**

(30) Priority: 16.05.2017 KR 20170060572
(71) Applicant: Hix, Daejeon 34138 (KR)
(72) Inventor: SEO, Suk Hyun, Daejeon 34141 (KR); KIM, Won Hoe, Daejeon 34687 (KR); LIM, Seung Hwan, Daejeon 34139 (KR); LEE, Seon Ju, Daejeon 34141 (KR); JUN, Ha Rin, Daejeon 34141 (KR); KIM, Young Beom, Namwon-si Jeollabuk-do 55758 (KR); LEE, Sung Jin, Seoul 08045 (KR)
(74) Representative: Grünecker Patent- und Rechtsanwälte PartG mbB
(86) International application number: PCT/KR2017/013984
(87) International publication number: WO 2018/212420

(57) **Abstract**

A SLA 3D printer according to the present invention comprises: a plurality of molding plates; a molding plate moving means capable of controlling each of the molding plates; a resin container in which the molding plates and a photocurable liquid resin are contained; a light source for curing the liquid resin; and an optical path changing means capable of changing an optical path, wherein, when one of the molding plates is being moved by the molding plate moving means, the optical path changing means changes the optical path so that light from the light source is emitted at another molding plate not being moved.

## Description

### [Technical Field]

The present disclosure relates to a stereolithography apparatus (SLA) 3D printer, and more specifically, to an SLA 3D printer capable of improving the production capacity of the SLA 3D printer by using an ultraviolet (UV) laser of the SLA 3D printer more efficiently.

### [Background Art]

A stereolithography apparatus (SLA) is one of 3D printing technologies, which uses a photocurable liquid material having a characteristic of being cured by ultraviolet (UV) rays and cures liquid by reflecting a UV laser using a mirror and irradiating the liquid with a desired form of UV laser so that a 3D product is formed.

That is, SLA 3D printers use a method in which a photocurable liquid resin material is used and cured by a laser such that layers of the photocurable liquid resin material are stacked up one by one.

When light is irradiated in the method of SLA 3D printers, light may be irradiated in dots but may also be irradiated in a plane using a digital light processing (DLP) method. The DLP method is a method in which light is irradiated in a plane using a DLP projector.

In the method of SLA 3D printers, a molding plate or bed is accommodated in a resin container filled with photocurable liquid resin, and the molding plate is irradiated with a UV laser so that a single layer is cured. Then, the molding plate is moved by a single-layer thickness and another single layer is cured in a repeated manner. When moving the molding plate by the single-layer thickness, the molding plate may simply be moved horizontally by the single-layer thickness, but in some cases, the molding plate may be tilted and then tilted back to an original slope so that the photocurable liquid resin is distributed in a uniform thickness at a position where the photocurable liquid resin is to be cured.

An example of such SLA 3D printers has been disclosed in Patent Document 1 (Korean Patent Application Publication No. 10-2016-0113062 (Date of Publication: September 28, 2016).

In a conventional method of SLA 3D printers, a UV laser is irradiated during a curing time but not during a moving time in which a molding plate moves by a single-layer thickness.

This is inefficient because the UV laser (light source for curing liquid resin), which is an important part of an SLA 3D printer device, is not utilized 100 percent.

### [Disclosure]

### [Technical Problem]

The present disclosure is to provide an SLA 3D printer capable of improving the production capacity of the SLA 3D printer by using a light source for curing liquid resin more efficiently.

### [Technical Solution]

An SLA 3D printer according to one embodiment of the present disclosure may include a plurality of molding plates, at least one molding plate mover configured to control movement of the plurality of molding plates, at least one resin container in which the plurality of molding plates and photocurable liquid resin are accommodated, a light source configured to cure the liquid resin, and an optical path changer configured to change an optical path, wherein, when one of the plurality of molding plates is being moved by the at least one molding plate mover, the optical path changer changes the optical path so that another molding plate that is not being moved is irradiated with light from the light source.

An optical path checker configured to check whether the optical path changer is aligned at an accurate position may be attached to the at least one resin container.

The optical path checker may include an optical path checker body in which an optical sensor and a hole are formed.

The number of the at least one resin container is the same as the number of the plurality of molding plates, and each of the at least one resin container accommodates one of the plurality of molding plates.

The optical path changer may include a single rotatable reflective mirror and a plurality of fixed reflective mirrors.

An SLA 3D printer according to another embodiment of the present disclosure may include a plurality of molding plates, at least one molding plate mover configured to control movement of the plurality of molding plates, at least one resin container in which the plurality of molding plates and photocurable liquid resin are accommodated, a light source configured to cure the liquid resin, and an optical path changer configured to change a direction of output light differently according to a position of incident light, wherein, when one of the plurality of molding plates is being moved by the at least one molding plate mover, a position of light incident on the optical path changer is changed so that another molding plate that is not being moved is irradiated with light from the light source.

The optical path changer may include a single N-path reflective mirror (where N is a natural number equal to or greater than 2) and N fixed reflective mirrors, and the N-path reflective mirror may be fixed and configured to reflect incident light toward one of the N fixed reflective mirrors, and a fixed reflective mirror to which light is reflected and transmitted may change according to a position of the incident light.

An SLA 3D printer according to another embodiment of the present disclosure may include a plurality of molding plates, at least one molding plate mover configured to control movement of the plurality of molding plates, at least one resin container in which the plurality of molding plates and photocurable liquid resin are accommodated, a liquid crystal display (LCD) light irradiation device, and an LCD light irradiation device mover configured to move the LCD light irradiation device, wherein the LCD light irradiation device may include a light source and an LCD to irradiate, by the LCD, light having a predetermined shape when the light source generates light for curing the liquid resin, and when one of the plurality of molding plates is being moved by the at least one molding plate mover, a position of the LCD light irradiation device is changed by the LCD light irradiation device mover so that another molding plate that is not being moved is irradiated with the light from the LCD light irradiation device.

An optical path checker that is configured to check whether the LCD light irradiation device is moved to an accurate position may be attached to the at least one resin container.

The optical path checker may include an optical path checker body in which an optical sensor and a hole are formed.

### [Advantageous Effects]

According to the present disclosure in some embodiments, an SLA 3D printer according to the present disclosure can use a light source for curing liquid resin more efficiently, thereby improving the production capacity of the SLA 3D printer.

### [Description of Drawings]

FIG. 1 is a conceptual diagram illustrating a top-down method of an SLA 3D printer.
FIG. 2 is a conceptual diagram illustrating a bottom-up method of an SLA 3D printer.
FIG. 3 is a conceptual diagram of an SLA 3D printer according to the present disclosure.
FIG. 4 illustrates a state where a rotatable reflective mirror is rotated from a state illustrated in FIG. 3.
FIG. 5 is a perspective view of an SLA 3D printer according to a first embodiment of the present disclosure.
FIG. 6 is a perspective view of an SLA 3D printer according to a second embodiment of the present disclosure.
FIG. 7 is a conceptual diagram of the SLA 3D printer in which the rotatable reflective mirror is omitted.
FIG. 8 illustrates an example in which an optical path checker is attached to a resin container.
FIG. 9 illustrates an example of a cross-sectional view of the optical path checker.
FIG. 10 illustrates an example in which an LCD light irradiation device is configured to move.

### [Mode for Invention]

The present disclosure may be modified in various ways and include various embodiments. Specific embodiments which are shown in the drawings will be described in detail. However, it should be understood that the present disclosure is not limited to the specific embodiments and includes all modifications, equivalents, and substitutions falling within the concept and technical scope of the present disclosure. In the description of the present disclosure, when a detailed description of a related known art is deemed to blur the content of the present disclosure, the detailed description thereof will be omitted.

The terms used in this application are used merely to describe the specific embodiments and are not intended to limit the present disclosure. A singular expression includes a plural expression unless the context clearly indicates otherwise.

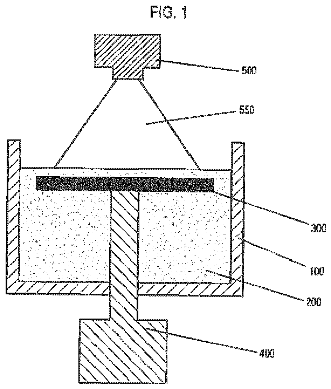

FIG. 1 is a conceptual diagram illustrating a top-down method of an SLA 3D printer.

In the SLA 3D printer of FIG. 1, photocurable liquid resin 200 is filled in a resin container 100, and a molding plate 300 is accommodated in the photocurable liquid resin 200. The molding plate 300 may be moved by a molding plate mover 400.

When a laser light 550 is irradiated using a UV laser 500 while the photocurable liquid resin 200 is placed on the molding plate 300, the photocurable liquid resin 200 on the molding plate 300 is cured. When curing of a single layer is completed, the molding plate 300 moves downward such that it is ready to cure a subsequent layer. By repeating this process, a 3D product is formed on the molding plate 300.

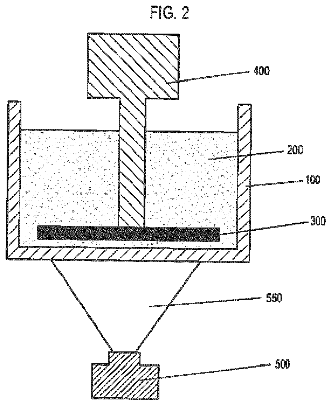

FIG. 2 is a conceptual diagram illustrating a bottom-up method of an SLA 3D printer.

In the SLA 3D printer of FIG. 2 as well, photocurable liquid resin 200 is filled in a resin container 100, and a molding plate 300 is accommodated in the photocurable liquid resin 200. The molding plate 300 may be moved by a molding plate mover 400.

A difference from FIG. 1 is that a direction in which a laser light 550 is irradiated from a UV laser 500 is toward a lower side of the resin container 100 rather than an upper side of the resin container 100.

For the laser light 550 irradiated to the lower side to reach the photocurable liquid resin 200, the bottom of the resin container 100 should be formed with a transparent material.

When the laser light 550 is irradiated using the UV laser 500 while the photocurable liquid resin 200 is below the molding plate 300, the photocurable liquid resin 200 below the molding plate 300 is cured. When curing of a single layer is completed, the molding plate 300 moves upward such that the molding plate 300 is ready to cure a subsequent layer. By repeating this process, a 3D product is formed on the molding plate 300.

When curing of a single layer is completed in the SLA 3D printers of FIGS. 1 and 2, the molding plate 300 has to move and the curing cannot be performed during the time when the molding plate 300 moves. That is, it is inefficient because the UV laser 500 is not involved in any task while the molding plate 300 is being moved by the molding plate mover.

The SLA 3D printer according to the present disclosure includes a plurality of molding plates such that when one of the molding plates is moving, another molding plate is irradiated with laser light from a UV laser. In this manner, the SLA 3D printer according to the present disclosure uses the UV laser more efficiently.

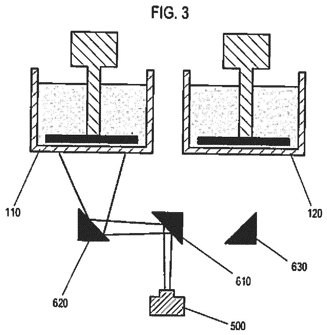

FIG. 3 is a conceptual diagram of the SLA 3D printer according to the present disclosure.

The SLA 3D printer of FIG. 3 includes a first resin container 110, a second resin container 120, a UV laser 500, a rotatable reflective mirror 610, a first fixed reflective mirror 620, and a second fixed reflective mirror 630.

When the UV laser 500 of FIG. 3 generates laser light, the laser light is reflected by the rotatable reflective mirror 610 and then by the first fixed reflective mirror 620, thereby irradiating the first resin container 110.

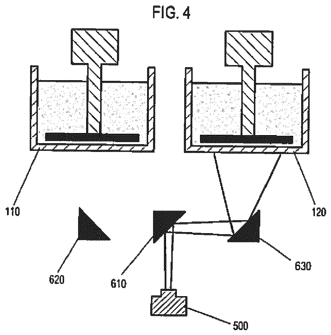

FIG. 4 illustrates a state where a rotatable reflective mirror is rotated from a state illustrated in FIG. 3.

Since the rotation of the rotatable reflective mirror 610 using a mechanical force can be easily implemented, a detailed description thereof will be omitted.

When the rotatable reflective mirror 610 of FIG. 3 is rotated as illustrated in FIG. 4, the laser light is reflected by the rotatable reflective mirror 610 and then by the second fixed reflective mirror 630, thereby irradiating the second resin container 120.

Therefore, the second resin container 120 may be irradiated with the laser light when the molding plate of the first resin container 110 is moving, and the first resin container 110 may be irradiated with the laser light when the molding plate of the second resin container 120 is moving.

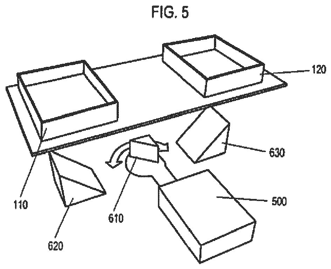

FIG. 5 is a perspective view of an SLA 3D printer according to a first embodiment of the present disclosure.

As a rotatable reflective mirror 610 of FIG. 5 rotates, laser light generated from the UV laser 500 is reflected by the first fixed reflective mirror 620 or the second fixed reflective mirror 630. Therefore, since it is possible to sequentially transmit the laser light to a first resin container 110 and a second resin container 120, the laser light may only be transmitted to a resin container in which a molding plate is stationary without transmitting the laser light to a resin container in which a molding plate is moving.

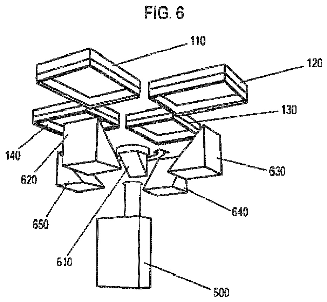

FIG. 6 is a perspective view of an SLA 3D printer according to a second embodiment of the present disclosure.

As the rotatable reflective mirror 610 of FIG. 6 rotates, laser light generated from the UV laser 500 is reflected by one of a first fixed reflective mirror 620, a second fixed reflective mirror 630, a third fixed reflective mirror 640, and a fourth fixed reflective mirror 650. Therefore, since it is possible to sequentially transmit the laser light to a first resin container 110, a second resin container 120, a third resin container 130, and a fourth resin container 140, the laser light may be transmitted only to a resin container in which a molding plate is stationary without transmitting the laser light to a resin container in which the molding plate is moving.

Therefore, since the SLA 3D printer according to the present disclosure causes laser light to be sequentially transmitted to resin containers in which molding plates are stationary, the UV laser is used efficiently.

However, in the embodiments illustrated in FIGS. 4 to 7, various problems may occur since the rotatable reflective mirror has to rotate. For example, when the rotatable reflective mirror is rotated by a motor, the degree of precision may not be high, and mechanical vibrations may occur. Also, time may be wasted if the printer has to wait until the vibration from the rotation to stop completely.

To address such problems, the SLA 3D printer may also be implemented with a structure which does not require a rotatable reflective mirror.

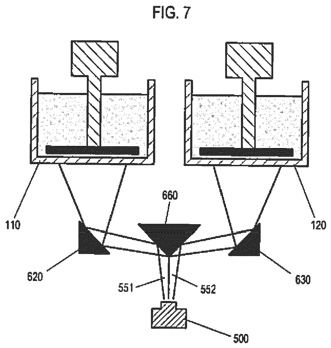

FIG. 7 is a conceptual diagram of the SLA 3D printer in which the rotatable reflective mirror is omitted.

The SLA 3D printer of FIG. 7 includes a first resin container 110, a second resin container 120, a UV laser 500, a fixed two-path reflective mirror 660, a first fixed reflective mirror 620, and a second fixed reflective mirror 630.

Laser lights generated from the UV laser 500 may be classified as a first laser light 551 and a second laser light 552.

The first laser light 551 generated from the UV laser 500 may be reflected by the two-path reflective mirror 660 and then by the first fixed reflective mirror 620 to reach the first resin container 110. Also, the second laser light 552 generated from the UV laser 500 may be reflected by the two-path reflective mirror 660 and then by the second fixed reflective mirror 630 to reach the second resin container 120.

Therefore, the second resin container 120 may be irradiated with the second laser light 552 when a molding plate of the first resin container 110 is moving, and the first resin container 110 may be irradiated with the first laser light 551 when a molding plate of the second resin container 120 is moving.

That is, since it is possible to sequentially transmit the laser light to the first resin container 110 and the second resin container 120, the laser light may be transmitted only to a resin container in which a molding plate is stationary without transmitting the laser light to a resin container in which a molding plate is moving.

In the two-path reflective mirror 660, a direction of output light may change according to a position of incident light. That is, in FIG. 7, light is output toward the first fixed reflective mirror 620 when a position of the incident light corresponds to the first laser light 551, and light is output toward the second fixed reflective mirror 630 when a position of the incident light corresponds to the second laser light 552. That is, the two-path reflective mirror 660 is fixed and configured to reflect incident light toward one of the two fixed reflective mirrors, and the fixed reflective mirror to which light is reflected and transmitted changes according to a position of the incident light.

If the two-path reflective mirror 660 is changed to an N-path reflective mirror (where N is a natural number equal to or greater than 3), laser light may be sequentially transmitted to N resin containers.

In the embodiment of FIG. 7, since laser light may be sequentially transmitted to a plurality of resin containers by using only fixed reflective mirrors, it is possible to address various problems which occur when a rotatable reflective mirror is used.

In the SLA 3D printer according to the present disclosure, when laser light is transmitted while a rotatable reflective mirror rotates, a position of a formed product may not be accurate when the position of the rotatable reflective mirror is not precisely controlled.

Therefore, the SLA 3D printer according to the present disclosure may include a part for checking whether the position of the rotatable reflective mirror is being precisely controlled.

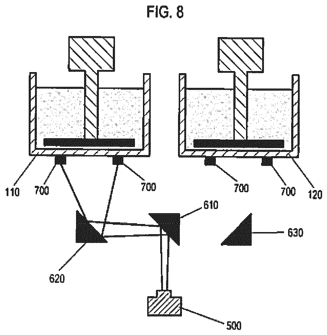

FIG. 8 illustrates an example in which an optical path checker is attached to a resin container.

In FIG. 8, optical path checkers 700 are attached to resin containers.

If after a very thin beam of laser light (since the laser beam is a laser beam used for checking an optical path, the laser beam may be referred to as "optical-path-checking laser light") is generated from a UV laser 500 of FIG. 8 and the optical path checker 700 is configured to check whether the optical-path-checking laser light has arrived, the optical-path-checking laser light would arrive only when the optical path changer (rotatable reflective mirror) according to the present disclosure is precisely controlled. And if a position of the optical path changer (rotatable reflective mirror) is even slightly inaccurate, the optical-path-checking laser light would not arrive at the optical path checker 700.

Whether the optical path changer (rotatable reflective mirror) is accurately controlled may be checked using the optical path checker 700.

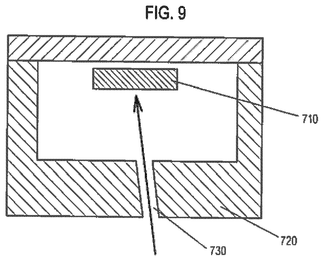

FIG. 9 illustrates an example of a cross-sectional view of the optical path checker.

Since an optical sensor 710 is formed inside an optical path checker body 720 in the optical path checker 700, the optical path checker 700 may check whether optical-path-checking laser light is present. A hole 730 is formed in the optical path checker body 720 in a direction in which laser light enters. When an arrow in FIG. 9 indicates the direction of the optical-path-checking laser light, a hole is formed in a direction that allows the optical-path-checking laser light indicated by the arrow to pass through the hole as illustrated in FIG. 9.

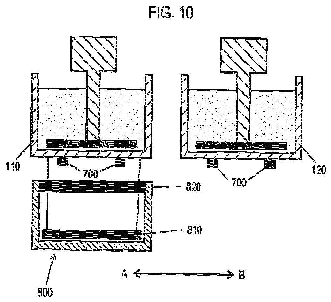

Since an SLA 3D printer using an LCD has also been developed so far, an embodiment illustrated in FIG. 10 is also possible.

FIG. 10 illustrates an example in which an LCD light irradiation device is configured to move.

An LCD light irradiation device 800 of FIG. 10 includes a light source 810 and an LCD 820. When the light source 810 generates light for curing resin, the LCD 820 causes only light having a predetermined shape to pass through the LCD 820. Therefore, a resin container may be irradiated with the light having the desired shape.

When an LCD light irradiation device mover (not illustrated) that is configured to move the LCD light irradiation device 800 in directions indicated by a double arrow in FIG. 10 (directions A and B) is further included, a first resin container 110 and a second resin container 120 may be sequentially irradiated with UV lights.

Therefore, the second resin container 120 may be irradiated with laser light when a molding plate of the first resin container 110 is moving, and the first resin container 110 may be irradiated with laser light when a molding plate of the second resin container 120 is moving.

To check whether the LCD light irradiation device mover has moved the LCD light irradiation device 800 to an accurate position, the optical path checkers 700 may be installed on the resin containers as illustrated in FIG. 10.

In the above embodiments, the reflective mirrors are merely examples and may be substituted by other optical parts (e.g., prisms, lenses and the like). Therefore, the optical path changer may also be implemented using parts other than a rotatable reflective mirror.

As illustrated in FIG. 3, the number of resin containers may be the same as the number of molding plates, and a single resin container may accommodate a single molding plate. However, a single resin container may also be configured to accommodate a plurality of molding plates. Therefore, the SLA 3D printer of the present disclosure may also be configured to include one resin container.

A light source for curing liquid resin may be a UV laser but may also be a light source used in the DLP method.

## Claims

1. An SLA 3D printer, comprising:
a plurality of molding plates;
at least one molding plate mover configured to control movement of the plurality of molding plates;
at least one resin container in which the plurality of molding plates and photocurable liquid resin are accommodated;
a light source configured to cure the liquid resin; and
an optical path changer configured to change an optical path,
wherein, when one of the plurality of molding plates is being moved by the at least one molding plate mover, the optical path changer changes the optical path so that another molding plate that is not being moved is irradiated with light from the light source.

2. The SLA 3D printer of Claim 1, wherein an optical path checker that is configured to check whether the optical path changer is aligned at an accurate position is attached to the at least one resin container.

3. The SLA 3D printer of Claim 2, wherein the optical path checker includes an optical path checker body in which an optical sensor and a hole are formed.

4. The SLA 3D printer of Claim 1, wherein the number of the at least one resin container is the same as the number of the plurality of molding plates, and each of the at least one resin container accommodates one of the plurality of molding plates.

5. The SLA 3D printer of Claim 1, wherein the optical path changer includes a single rotatable reflective mirror and a plurality of fixed reflective mirrors.

6. An SLA 3D printer, comprising:
a plurality of molding plates;
at least one molding plate mover configured to control movement of the plurality of molding plates;
at least one resin container in which the plurality of molding plates and photocurable liquid resin are accommodated;
a light source configured to cure the liquid resin; and
an optical path changer configured to change a direction of output light differently according to a position of incident light,
wherein, when one of the plurality of molding plates is being moved by the at least one molding plate mover, a position of light incident on the optical path changer is changed so that another molding plate that is not being moved is irradiated with light from the light source.

7. The SLA 3D printer of Claim 6, wherein the optical path changer includes a single N-path reflective mirror and N fixed reflective mirrors, N being a natural number equal to or greater than 2, and
wherein the N-path reflective mirror is fixed and configured to reflect incident light toward one of the N fixed reflective mirrors, and a fixed reflective mirror to which light is reflected and transmitted changes according to a position of the incident light.

8. An SLA 3D printer, comprising:
a plurality of molding plates;
at least one molding plate mover configured to control movement of the plurality of molding plates;
at least one resin container in which the plurality of molding plates and photocurable liquid resin are accommodated;
a liquid crystal display (LCD) light irradiation device; and
an LCD light irradiation device mover configured to move the LCD light irradiation device,
wherein the LCD light irradiation device includes a light source and an LCD to irradiate, by the LCD, light having a predetermined shape when the light source generates light for curing the liquid resin, and
when one of the plurality of molding plates is being moved by the at least one molding plate mover, a position of the LCD light irradiation device is changed by the LCD light irradiation device mover so that another molding plate that is not being moved is irradiated with the light from the LCD light irradiation device.

9. The SLA 3D printer of Claim 8, wherein an optical path checker that is configured to check whether the LCD light irradiation device is moved to an accurate position is attached to the at least one resin container.

10. The SLA 3D printer of Claim 9, wherein the optical path checker includes an optical path checker body in which an optical sensor and a hole are formed.
